# EUROPEAN PATENT SPECIFICATION

(11) **EP 4 546 820 B1**
(45) Date of publication and mention of the grant of the patent: **09.09.2026**
(21) Application number: 23851605.8
(22) Date of filing: 28.07.2023
(51) Int. Cl.: H04M 1/03, H04R 9/06, H04R 9/02, H04R 1/28

(54) **ELECTRONIC DEVICE**
ELEKTRONISCHE VORRICHTUNG
DISPOSITIF ÉLECTRONIQUE

(30) Priority: 09.08.2022 CN 202222090492 U
(43) Date of publication of application: 30.04.2025
(73) Proprietor: Huawei Technologies Co., Ltd., Shenzhen, Guangdong 518129 (CN)
(72) Inventor: QIN, Renxuan, Shenzhen, Guangdong 518129 (CN); LIU, Yang, Shenzhen, Guangdong 518129 (CN); ZHAO, Wenchang, Shenzhen, Guangdong 518129 (CN); LIU, Fei, Shenzhen, Guangdong 518129 (CN); SHEN, Laiwei, Shenzhen, Guangdong 518129 (CN)
(74) Representative: Körber, Martin Hans
(86) International application number: PCT/CN2023/109714
(87) International publication number: WO 2024/032384

(56) References cited:
- CN-A- 113 099 364
- CN-U- 216 700 051
- CN-U- 218 450 508
- US-A1- 2017 045 996

## Description

### TECHNICAL FIELD

This application relates to the field of terminal technologies, and in particular, to an electronic device.

### BACKGROUND

Sound apparatuses are usually disposed in electronic devices such as mobile phones, tablet computers, or laptop computers. In a call scenario of a user, a problem of sound leakage usually exists. For a mobile terminal, how to make a private call that not only meets a requirement of the user for volume in an ear but also prevents another person from obtaining key call information of the user in a confined environment such as a conference room or an elevator is an issue needing to be urgently resolved and is a technical trend for improvement.

CN 113099364 A discloses an electronic device that incorporates dual-vibration acoustic output structure designed to reduce sound leakage during voice calls while also supporting normal loudspeaker operation.

### SUMMARY

This application provides an electronic device, to reduce a risk of sound leakage of the electronic device. The present invention is defined by the enclosed claims. In the following description, embodiments which are not covered by the claims are to be considered as examples necessary for understanding the invention.

This application provides an electronic device, including:
a rear housing;
a middle frame, where the middle frame is connected to the rear housing;
a display, where the display is connected to a side that is of the middle frame and that is away from the rear housing, and the display and the middle frame are assembled to form an accommodation space; and
a sound-making system, where the sound-making system is installed in the accommodating space, the sound-making system includes a housing and a speaker, the speaker is disposed in the housing, a first sound-making module and a second sound-making module are disposed in the speaker, and the housing is provided with a first sound-making hole and a second sound-making
hole.

The electronic device is provided with a first sound output portion and a second sound output portion, where the first sound output portion is provided closer to the display than the second sound output portion, or the first sound output portion is located inside the display, and the second sound output portion is located outside the display.

The first sound-making hole communicates with the first sound output portion to form a first sound-making path, a sound emitted by the first sound-making module is propagated outward through the first sound-making path, the second sound-making hole communicates with the second sound output portion to form a first sound-making path, and a sound emitted by the second sound-making module is propagated outward through the second sound-making path.

In this application, the first sound-making module is disposed corresponding to the first sound-making hole, so that a first sound-making channel communicates with the first sound-making hole. The second sound-making module is disposed corresponding to the second sound-making hole, so that a second sound-making channel communicates with the second sound-making hole.

The first sound output portion of the electronic device may be a sound output hole provided in the display, or may be a gap in a connection between the display and the middle frame. The second sound output portion of the electronic device may be a sound output hole provided in the rear housing, or may be a gap in a connection between the rear housing and the middle frame. Alternatively, the first sound output portion and the second sound output portion are formed at other positions in the electronic device. This is not specifically limited herein.

The first sound output portion is provided in the electronic device relatively close to a human ear canal, to help a user listen to a sound. The second sound output portion is provided in the electronic device relatively away from the human ear canal, to reduce a risk of interference caused by a sound that is emitted by the second sound output portion when the user listens to a sound emitted by the first sound output portion.

In a possible design, along a thickness direction of the electronic device, the first sound-making hole and the second sound-making hole penetrate through the housing, the first sound-making hole is provided in the housing and at a position corresponding to the first sound-making module, and the second sound-making hole is provided in the housing and at a position corresponding to the second sound-making module.

A gap in a connection between the display and the middle frame forms the first sound output portion. A recess portion is provided on a side that is of the middle frame and that is close to the display. A propagation cavity is formed through the recess portion and the display, and the first sound-making hole communicates with the first sound output portion through the propagation cavity.

The second sound output portion penetrates through the rear housing, and communicates with the second sound-making hole.

In this application, due to a specific error in assembling the display and the middle frame, a gap extending backward exists in a bonding position between the display and the middle frame, so that the sound emitted by the first sound-making module can be propagated outward through the first sound-making hole, and the gap (the first sound output portion) in the connection between the display and the middle frame. Because the second sound output portion is provided in the rear housing, the sound emitted by the second sound-making module can be propagated outward through the second sound-making hole and the second sound output portion. Therefore, an earpiece hole provided in the electronic device can be canceled, ensuring an exquisite appearance of the electronic device.

The first sound-making hole and the second sound-making hole are not provided on a same side of the housing. A hole is provided in the rear housing, to form the second sound output portion corresponding to the second sound-making hole. In other words, a sound emitted by the first sound-making module can be propagated outward through a first sound-making path that is formed by the first sound-making hole, the first sound-making channel, and the first sound output portion (the gap in the connection between the display and the middle frame). The sound emitted by the second sound-making module can be propagated outward through a second sound-making path that is formed by the second sound-making hole and the second sound output portion (the hole in the rear housing). In addition, in this embodiment, it can also be implemented that sound waves that are out of phase with each other and that are emitted by the first sound-making module and the second sound-making module can cancel each other when propagated to a position of a nearby person.

In a possible design, the electronic device further includes a first sealing element and a second sealing element.

The middle frame is provided with a bypass portion, configured to bypass communication between the first sound-making hole and the propagation cavity.

The first sealing element is configured to seal a connection position between the first sound-making hole and the bypass portion, and the second sealing element is configured to seal a connection position between the second sound-making hole and the second sound output portion.

Both the first sound output portion and the second sound output portion are located on the top of the electronic device, and the top is an upper part of the electronic device when used in a portrait mode.

In this application, the first sealing element and the second sealing element are disposed to prevent mutual interference between a sound emitted by the first sound-making module and a sound emitted by the second sound-making module.

In a possible design, along a length direction of the electronic device, the first sound-making hole penetrates through the housing, and the first sound-making hole is provided in the housing and at a position corresponding to the first sound-making module.

A gap in a connection between the display and the middle frame forms the first sound output portion, the middle frame is provided with a first sound-making channel, and the first sound-making hole communicates with the first sound output portion through the first sound-making channel.

Along a thickness direction of the electronic device, the second sound-making hole penetrates through the housing, and the second sound-making hole is provided in the housing and at a position corresponding to the second sound-making module.

The second sound output portion penetrates through the rear housing, and communicates with the second sound-making hole.

In this application, two holes are provided in the rear housing along the thickness direction of the electronic device, to form the first sound output portion corresponding to the first sound-making hole, and the second sound output portion corresponding to the second sound-making hole. The middle frame is disposed between the housing and the display, which affects sound propagation. Therefore, a recess portion is provided in a part of an end surface that is of the middle frame and that is close to the display, to form a propagation cavity, and a gap between the part of the middle frame and the display is increased. In other words, a sound emitted by the first sound-making module can be propagated outward through a first sound-making path that is formed by the first sound-making hole, the propagation cavity, and the first sound output portion. A sound emitted by the second sound-making module can be propagated outward through a second sound-making path that is formed by the second sound-making hole and the second sound output portion. In addition, in this embodiment, it can also be implemented that sound waves that are out of phase with each other and that are emitted by the first sound-making module and the second sound-making module can cancel each other when propagated to a position of a nearby person.

The electronic device further includes a first sealing element and a second sealing element.

The first sealing element is configured to seal a connection position between the first sound-making hole and the first sound-making channel, and the second sealing element is configured to seal a connection position between the second sound-making hole and the second sound output portion.

Both the first sound output portion and the second sound output portion are located on the top of the electronic device, and the top is an upper part of the electronic device when used in a portrait mode.

In this application, the first sealing element and the second sealing element are disposed to prevent mutual interference between the sound emitted by the first sound-making module and the sound emitted by the second sound-making module.

In a possible design, a gap in a connection between the display and the middle frame forms the first sound output portion, and a gap in a connection between the rear housing and the middle frame forms the second sound output portion.

Along a length direction of the electronic device, the first sound-making hole and the second sound-making hole penetrate through the housing, and the first sound-making hole and the second sound-making hole are located on a same side of the housing.

The middle frame is provided with a first sound-making channel and a second sound-making channel.

The first sound-making hole communicates with the first sound output portion through the first sound-making channel, and the second sound-making hole communicates with the second sound output portion through the second sound-making channel.

In this application, one end that is of the first sound-making channel and that is away from the first sound-making hole extends to the connection between the middle frame and the display. The second sound-making channel communicates with the second sound-making hole, and one end that is of the second sound-making channel and that is away from the second sound-making hole extends to the connection between the middle frame and the rear housing.

Due to a specific error in assembling the display and the middle frame, a gap extending backward exists in a bonding position between the display and the middle frame, so that a sound emitted by the first sound-making module can be propagated outward through the first sound-making hole, the first sound-making channel, and the gap in the connection between the display and the middle frame. Due to a specific error in assembling the rear housing and the middle frame, a gap extending forward exists in a bonding position between the rear housing and the middle frame, so that a sound emitted by the second sound-making module can be propagated outward through the second sound-making hole, the second sound-making channel, and the gap in the connection between the rear housing and the middle frame. In this embodiment, a sound is propagated outward through the gap between the display and the middle frame and the gap between the rear housing and the middle frame, and an earpiece hole provided in the electronic device is canceled, ensuring an exquisite appearance of the electronic device.

The first sound-making hole and the second sound-making hole are provided on a same side of the housing. The first sound-making channel extends from the first sound-making hole to a connection gap between the display and the middle frame to form an approximately L shape. The second sound-making channel extends from the second sound-making hole to a connection gap between the rear housing and the middle frame to also form an approximately L shape. In this way, the first sound-making path and the second sound-making path are more symmetrical, to obtain better cancellation effect.

In a possible design, the electronic device further includes a first sealing element.

The first sealing element is disposed between the housing and the middle frame. The first sealing element is configured to seal a connection position between the first sound-making hole and the first sound-making channel, and a connection position between the second sound-making hole and the second sound-making channel.

In this application, the first sealing element is in a "Θ" shape. To be specific, the first sealing element is provided with a first hole and a second hole, and the first hole corresponds to the first sound-making hole, so that the first sound-making hole communicates with the first sound-making channel, and the second hole corresponds to the second sound-making hole, so that the second sound-making hole communicates with the second sound-making channel. The first sealing element is disposed, to prevent mutual interference between a sound emitted by the first sound-making module and a sound emitted by the second sound-making module, avoid cancellation of the two sounds in the electronic device, and ensure normal use of the user.

Because the first sound-making hole and the second sound-making hole are disposed on the same side of the housing, in this application, one first sealing element may be used for sealing the two sound-making holes simultaneously, thereby reducing processes of sealing the sound-making holes, simplifying an assembly process, and reducing costs.

A material of the first sealing element may be silica gel. The first sealing element can implement sealing effect by pressing the housing against the middle frame. Alternatively, the first sealing element may be bonded to the housing and the middle frame.

In a possible design, the first sound-making hole and the second sound-making hole are provided along a thickness direction of the electronic device.

The first sound-making channel and the second sound-making channel are provided along the thickness direction of the electronic device.

In this application, the first sound-making module and a second sound-making module are disposed along the thickness direction of the electronic device, so that positions of the first sound-making module, the first sound-making hole and the first sound-making channel are at a same height, and positions of the second sound-making module, the second sound-making hole and the second sound-making channel are at a same height, thereby shortening a first sound-making path and a second sound-making path as much as possible, and ensuring sound effect.

In a possible design, a surface on which the first sound-making hole and the second sound-making hole are located is a first inclined surface.

A second inclined surface corresponding to the first inclined surface is disposed on the middle frame, and the housing presses against the first sealing element through fitting between the first inclined surface and the second inclined surface.

In this application, the first sealing element is disposed between the first inclined surface and the second inclined surface. A surface that is of the housing and that fits with the middle frame is arranged as an inclined surface, and the first inclined surface of the housing presses against the second inclined surface, so that the first inclined surface and the second inclined surface press-fit the first sealing element, and the first inclined surface and the second inclined surface are closely attached to the first sealing element.

In a possible design, a limiting part is further disposed on the middle frame, and the limiting part abuts against a side that is of the housing and that is away from the first inclined surface, to limit a position of the housing.

In this application, along a length direction of the electronic device, the limiting part and the second inclined surface respectively abut against two sides of the housing, to prevent the housing from shaking caused by external force.

In a possible design, along a thickness direction of the electronic device, a surface on which the first sound-making hole and the second sound-making hole are located is a first straight surface.

A second straight surface corresponding to the first straight surface is disposed on the middle frame.

In this application, in comparison with fitting between inclined surfaces, a surface that is of a housing and that fits with the middle frame is arranged as a straight surface, which helps to compress space occupied by the housing in a length direction.

In a possible design, the electronic device further includes a bracket, and the bracket is disposed on a side that is of the housing and that is away from the first straight surface.

The bracket is configured to limit a position of the housing.

In this application, along a length direction of the electronic device, the bracket and the second inclined surface respectively abut against two sides of the housing, to prevent the housing from shaking caused by external force.

In a possible design, a third inclined surface is disposed on the side that is of the housing and that is away from the first straight surface.

A fourth inclined surface fitting with the third inclined surface is disposed on the bracket, and the bracket presses against the first sealing element through fitting between the fourth inclined surface and the third inclined surface.

In this application, the first sealing element is disposed between the first straight surface and the second straight surface. The bracket press-fits the housing through the inclined surface, to provide pressing force in the length direction of the housing, so that the housing press-fits the first sealing element, and the first sealing element is closely attached between the first straight surface and the second straight surface, thereby ensuring sealing effectiveness.

In a possible design, the electronic device further includes a buffer element.

The buffer element is disposed between the bracket and the housing.

In this application, the buffer element may be foam, which plays a buffering role for the housing, and reduces a risk of damage to a speaker in the housing when the bracket, under impact from external force, transfers the force to the speaker.

In a possible design, the first sound-making hole and the second sound-making hole are provided along a width direction of the electronic device.

The first sound-making channel and the second sound-making channel are provided along the width direction of the electronic device.

In this application, the first sound-making hole and the second sound-making hole are provided transversely, and the corresponding first sound-making channel and the corresponding second sound-making channel are also provided transversely, thereby increasing a sound-making area of a sound-making hole and a generation channel, improving airflow sound and audio effect.

In a possible design, a blocking part is disposed on an inner wall of the housing. The blocking part is configured to prevent the sound emitted by the second sound-making module from being propagated to the first sound-making path and the sound emitted by the first sound-making module from being propagated to the second sound-making path.

In this application, because the first sound-making module and the second sound-making module are disposed along the thickness direction of the electronic device, and the first sound-making hole and the second sound-making hole are provided along the width direction of the electronic device, the blocking part is disposed to prevent mutual interference between sounds emitted by the first sound-making module and the second sound-making module.

In a possible design, the blocking part includes a first blocking part and a second blocking part.

Along a height direction of the electronic device, a lower edge part of the first sound-making hole protrudes toward the speaker to form the first blocking part, and an upper edge part of the second sound-making hole protrudes toward the speaker to form the second blocking part.

Both the first blocking part and the second blocking part are attached to the speaker.

In this application, the first blocking part is located below the first sound-making hole, and the second blocking part is located above the second sound-making hole, so that the first blocking part and the second blocking part prevent mutual crosstalk between sounds of the first sound-making hole and the second sound-making hole.

In a possible design, when the electronic device is in a handset mode, a sound wave propagated outward by the first sound-making module through the first sound-making path is at least partially out of phase with a sound wave propagated outward by the second sound-making module through the second sound-making path.

In this application, in the handset mode, the first sound-making module propagates a positive phase sound wave outward through the first sound-making path, and the second sound-making module propagates a negative phase sound wave outward through the second sound-making path, forming dipole effect for a person near a user during a call by using the electronic device. To be specific, sound waves that are out of phase with each other and that are emitted by the first sound-making module and the second sound-making module can cancel each other when propagated to a position of a nearby person, so as to reduce a risk of sound leakage of the electronic device and implement a privacy protection function of the electronic device during a call. In a speaker mode, the first sound-making module propagates a positive phase sound wave outward through the first sound-making path, and the second sound-making module propagates a positive phase sound wave outward through the second sound-making path, to increase volume by superimposing sound waves in a same phase.

In a possible design, abutting parts are disposed in the housing, and a periphery of the speaker abuts against and fits with the abutting parts along the thickness direction and the width direction of the electronic device.

In this application, the housing includes an upper housing and a lower housing, the upper housing and the lower housing are assembled to form an accommodation cavity, and the speaker is installed in the accommodation cavity. The abutting part is disposed on each of an inner periphery of the upper housing and the lower housing. After the speaker is installed in the accommodation cavity, the periphery of the speaker abuts against the abutting parts. The abutting part is in a double-step design. When no another fastening part is added to the housing, the speaker is limited along the thickness direction and the width direction of the electronic device, thereby improving assembly and combination strength between the housing and the speaker, and ensuring connection reliability between the housing and the speaker.

A separation part may be further disposed in the housing. The separation part is disposed between the first sound-making hole and the second sound-making hole. The separation part protrudes along a length direction of the electronic device, and abuts against the speaker, to separate the first sound-making hole from the second sound-making hole, so that a sound emitted by the first sound-making module can enter the first sound-making hole, and a sound emitted by the second sound-making module can enter the second sound-making hole.

Expansion surfaces are further disposed in the first sound-making hole and the second sound-making hole. The expansion surfaces are located at positions at which the first sound-making hole and the second sound-making hole are excessively close to the speaker. In this way, a sound-making area of each of the first sound-making hole and the second sound-making hole is expanded, to ensure sound-making effect.

In a possible design, the speaker further includes a magnetic component. The first sound-making module and the second sound-making module are disposed on two opposite sides of the magnetic component along the thickness direction of the electronic device.

The first sound-making module includes a first voice coil and a first diaphragm, a part of the first voice coil is inserted into a magnetic gap of the magnetic component, and a part of the first voice coil is connected to the first diaphragm.

The second sound-making module includes a second voice coil and a second diaphragm, a part of the second voice coil is inserted into the magnetic gap of the magnetic component, and a part of the second voice coil is connected to the second diaphragm.

In a possible design, the magnetic component includes a middle part and edge parts, the edge parts are disposed around the middle part, and a gap between the edge parts and the middle part magnet forms the magnetic gap, where at least one of the middle part and the edge part is a magnetic element.

The first voice coil is inserted into an upper part of the magnetic gap, and the second voice coil is inserted into a lower part of the magnetic gap.

In this application, the first sound-making module includes a first voice coil, a first magnetic conductive plate, a first basin frame, a first circuit board, and a first diaphragm that are sequentially assembled. The second sound-making module includes a second voice coil, a second magnetic conductive plate, a second basin frame, a second circuit board, and a second diaphragm that are sequentially assembled. The magnetic component includes the middle part and a plurality of edge parts. The middle part and the plurality of edge parts are clamped between the first magnetic conductive plate and the second magnetic conductive plate. At least a part of the first voice coil is sleeved on a periphery of the first magnetic conductive plate, and is inserted into an upper part of the magnetic gap. At least a part of the second voice coil is sleeved on a periphery of the second magnetic conductive plate, and is inserted into a lower part of the magnetic gap. In addition, the first voice coil and the second voice coil are inserted into the magnetic gap in a staggered manner. The first basin frame is disposed on an outer ring of the first magnetic conductive plate and is connected to the magnetic component. The second basin frame is disposed on an outer ring of the second magnetic conductive plate and is connected to the magnetic component, so as to play a supporting role. The first circuit board is disposed above the first basin frame, so that the first circuit board is electrically connected to the first voice coil and an external power supply. The second circuit board is disposed below the first basin frame, so that the second circuit board is electrically connected to the second voice coil and the external power supply. The first circuit board and the second circuit board have specific elasticity, and can play a role of supporting and braking balance. The first diaphragm is connected to the first voice coil, and the second diaphragm is connected to the second voice coil. The first voice coil and the second voice coil are powered on, to control vibration of the first diaphragm and the second diaphragm to propagate sounds outward.

The two sound-making modules can work independently by adjusting control signals of the two sound-making modules. To be specific, the first diaphragm and the second diaphragm are controlled to vibrate in a same direction, so that the first sound-making module propagates a positive/negative phase sound wave outward through a first sound-making path, and the second sound-making module propagates a negative/positive phase sound wave outward through a second sound-making path. The first diaphragm and the second diaphragm are controlled to vibrate in opposite directions, so that the first sound-making module propagates a positive/negative phase sound wave outward through a first sound-making path, and the second sound-making module propagates a negative/positive phase sound wave outward through a second sound-making path.

In a possible design, the first sound-making hole and the second sound-making hole are provided on two opposite sides of the speaker along a thickness direction of the electronic device.

Alternatively, the first sound-making hole is provided on a side of the speaker along a length direction of the electronic device, and the second sound-making hole is provided on a side of the speaker along a thickness direction of the electronic device.

Alternatively, the first sound-making hole and the second sound-making hole are provided on a same side of the speaker along a length direction of the electronic device.

In a possible design, the sound-making system further includes a microphone and a filter.

The first sound-making module emits a first sound signal during working, the microphone is capable of picking up the first sound signal, and transferring the first sound signal to the filter. The filter is capable of processing the first sound signal into a second sound signal, and transferring the second sound signal to the second sound-making module.

A sound wave of the first sound signal is at least partially out of phase with a sound wave of the second sound signal.

In this application, during specific working, the first sound-making module starts to work first by adjusting a control signal of the first sound-making module. To be specific, a first diaphragm is controlled to vibrate, so that the first sound-making module propagates a first sound signal with a positive/negative phase sound wave outward through a first sound-making path, the microphone obtains the first sound signal and transfers the first sound signal to the filter, and the filter processes the first sound signal to form a second sound signal that is equal in amplitude but out of phase with the first sound signal, and transfers the second sound signal to the second sound-making module, so that the second sound-making module propagates a negative/positive phase sound wave outward through a second sound-making path. In this way, sound waves that are out of phase with each other and that are emitted by the first sound-making module and the second sound-making module can cancel each other when propagated to a position of a nearby person. In this embodiment, sound cancellation effect is further improved through sound pickup by the microphone and signal processing and compensation by the filter.

A process of the first sound-making module making a sound to the second sound-making module making a sound is very short, and the sounds are made almost simultaneously in a cycle.

In a possible design, the sound-making system further includes a microphone, a filter, and a third sound-making module.

A sound propagated by the first sound-making module to the outside and a sound propagated by the second sound-making module to the outside are canceled to form a residual third sound signal.

The microphone is capable of picking up the third sound signal, and transferring the third sound signal to the filter. The filter is capable of processing the third sound signal into a fourth sound signal, and transferring the fourth sound signal to the third sound-making module.

A sound wave of the third sound signal is at least partially out of phase with a sound wave of the fourth sound signal.

In this application, during specific working, the sound of the first sound-making module and the sound of the second sound-making module may not be completely canceled, and there is the residual third sound signal. The microphone is controlled to obtain the third sound signal and transfer the third sound signal to the filter. The filter processes the third sound signal to form the fourth sound signal that is equal in amplitude but out of phase with the third sound signal, and transfers the fourth sound signal to the third sound-making module, so that the third sound-making module propagates outward. In this way, a sound wave that is not canceled and a sound wave that is emitted by the third sound-making module cancel each other.

The third sound-making module is a loudspeaker, and is disposed on an electronic device relatively close to a human ear. The loudspeaker is used as a third sound source other than the first sound-making module and the second sound-making module, so that the loudspeaker can improve sound cancellation effect outside the electronic device, and further reduce impact on a user for volume in an ear.

It should be understood that the foregoing general descriptions and the following detailed descriptions are merely examples, and are not intended to limit this application.

### BRIEF DESCRIPTION OF DRAWINGS

FIG. 1 is a diagram of a structure of an electronic device according to an embodiment of this application;
FIG. 2 is a sectional view of a sound-making system according to an embodiment of this application;
FIG. 3 is a sectional view of connection between a housing and a middle frame according to a first embodiment of this application;
FIG. 4 is a diagram of connection between the housing and a sealing element in FIG. 3;
FIG. 5 is a diagram of a structure of the housing in FIG. 3;
FIG. 6 is a sectional view of connection between a housing and a middle frame according to a second embodiment of this application;
FIG. 7 is a diagram of connection between the housing and a sealing element in FIG. 6;
FIG. 8 is a diagram of a structure of the housing in FIG. 6;
FIG. 9 is a sectional view of connection between a housing and a middle frame according to a third embodiment of this application;
FIG. 10 is a sectional view of connection between a housing and a middle frame according to a third embodiment of this application;
FIG. 11 is a diagram of connection between the housing and a sealing element in FIG. 9;
FIG. 12 is a diagram of a structure of the housing in FIG. 9;
FIG. 13 is a sectional view of FIG. 10;
FIG. 14 is a sectional view of connection between a housing and a middle frame according to a fourth embodiment of this application;
FIG. 15 is a sectional view of connection between a housing and a middle frame according to a fifth embodiment of this application;
FIG. 16 is an exploded view of a sound-making system according to an embodiment of this application;
FIG. 17 is a diagram of a partial structure of an electronic device according to this application;
FIG. 18 is a diagram of a partial structure of an electronic device according to this application; and
FIG. 19 is a diagram a structure of an electronic device without a rear housing according to this application.

### Reference numerals:

1: electronic device; 11: rear housing; 111: second sound output portion; 12: middle frame; 121: first sound-making channel; 122: second sound-making channel; 123: second inclined surface; 124: limiting part; 125: second straight surface; 126: recess portion; 13: display; 131: first sound output portion; 14: accommodating space; 15: sound-making system; 151: housing; 151a: first sound-making hole; 151b: second sound-making hole; 151c: first inclined surface; 151d: first straight surface; 151e: third inclined surface; 151f: blocking part; 151fl: first blocking part; 151f2: second blocking part; 151g: abutting part; 151h: separation part; 151i: upper housing; 151j: lower housing; 151k: expansion surface; 152: speaker; 152a: first sound-making module; 152a1: first voice coil; 152a2: first magnetic conductive plate; 152a3: first basin frame; 152a4: first circuit board; 152a5: first diaphragm; 152b: second sound-making module; 152b1: second voice coil; 152b2: second magnetic conductive plate; 152b3: second basin frame; 152b4: second circuit board; 152b5: second diaphragm; 152c: magnetic component; 153: microphone; 154: third sound-making module; 16: first sealing element; 17: bracket; 171: fourth inclined surface; 18: buffer element; 19: second sealing element;
X: width direction; Y: length direction; Z: thickness direction.

The accompanying drawings herein are incorporated into this specification and constitute a part of this specification, show embodiments in accordance with this application, and are used together with this specification to explain the principle of this application.

### DESCRIPTION OF EMBODIMENTS

To better understand the technical solutions of this application, the following describes embodiments of this application in detail with reference to the accompanying drawings.

Terms used in embodiments of this application are merely for the purpose of describing specific embodiments, but are not intended to limit this application. The terms "a", "said" and "the" of singular forms used in embodiments and the appended claims of this application are also intended to include plural forms, unless otherwise specified in the context clearly.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification usually indicates an "or" relationship between the associated objects.

It should be noted that orientation words such as "above", "below", "left", and "right" described in embodiments of this application are described from perspectives shown in the accompanying drawings, and should not be understood as a limitation on embodiments of this application. In addition, in the context, it should be further understood that when it is mentioned that one element is connected "above" or "below" another element, the element can be directly connected "above" or "below" the another element, or may be indirectly connected "above" or "below" the another element by using an intermediate element.

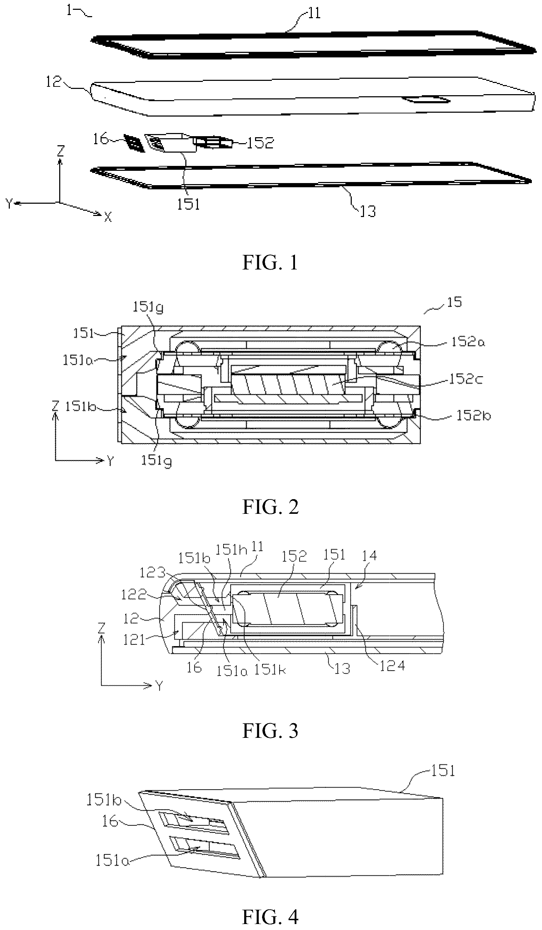

As shown in FIG. 1, an embodiment provides an electronic device 1. The electronic device 1 may be a mobile phone, a smartwatch, a tablet computer, a notebook computer, or the like. The electronic device 1 includes a rear housing 11, a middle frame 12, a display 13, and a sound-making system 15. The rear housing 11 is a rear battery cover of the electronic device 1, the rear housing 11 is bonded to one side of the middle frame 12, the display 13 is bonded to the other side of the middle frame 12, the display 13 and the middle frame 12 are assembled to form an accommodation space 14, and the sound-making system 15 is installed in the accommodation space 14.

In some embodiments, when the electronic device 1 is a foldable mobile phone or has a double-sided display, the rear housing 11 may also be a display.

As shown in FIG. 2, FIG. 3, FIG. 6, FIG. 9, and FIG. 10, the sound-making system 15 includes a housing 151 and a speaker 152. The speaker 152 is disposed in the housing 151, a first sound-making module 152a and a second sound-making module 152b are disposed in the speaker 152, and the housing 151 is provided with a first sound-making hole 151a and a second sound-making hole 151b. The first sound-making module 152a is disposed corresponding to the first sound-making hole 151a, and the second sound-making module 152b is disposed corresponding to the second sound-making hole 151b. In some embodiments, the first sound-making hole 151a and the second sound-making hole 151b may be located on a same side of the housing 151. The middle frame 12 is provided with a first sound-making channel 121 and a second sound-making channel 122. The first sound-making channel 121 communicates with the first sound-making hole 151a, and one end that is of the first sound-making channel 121 and that is away from the first sound-making hole 151a extends to a connection between the middle frame 12 and the display 13. The second sound-making channel 122 communicates with the second sound-making hole 151b, and one end that is of the second sound-making channel 122 and that is away from the second sound-making hole 151b extends to a connection between the middle frame 12 and the rear housing 11. The first sound-making hole 151a, the first sound-making channel 121, and a gap in the connection between the middle frame 12 and the display 13 forms a first sound-making path, and a sound emitted by the first sound-making module 152a is propagated outward through the first sound-making path. The second sound-making hole 151b, the second sound-making channel 122, and a gap in the connection between the middle frame 12 and the rear housing 11 forms a second sound-making path, and a sound emitted by the second sound-making module 152b is propagated outward through the second sound-making path.

The electronic device 1 has a handset mode and a speaker mode. When the electronic device 1 is in the handset mode, a sound wave propagated outward by the first sound-making module 152a through the first sound-making path is at least partially out of phase with a sound wave propagated outward by the second sound-making module 152b through the second sound-making path. When the electronic device 1 is in the speaker mode, a sound wave propagated outward by the first sound-making module 152a through the first sound-making path is at least partially in phase with a sound wave propagated outward by the second sound-making module 152b through the second sound-making path.

That a sound wave propagated outward through the first sound-making path is at least partially out of phase with a sound wave propagated outward through the second sound-making path means that phases of the sound waves in two paths may be completely canceled, or phases of the sound waves in two paths may be at least partially canceled. That a sound wave propagated outward through the first sound-making path is at least partially in phase with a sound wave propagated outward through the second sound-making path means that phases of the sound waves in two paths may be completely superimposed, or phases of sound waves in two paths may be at least partially superimposed.

In this embodiment, due to a specific error in assembling the display 13 and the middle frame 12, a gap extending backward exists in a bonding position between the display 13 and the middle frame 12, so that a sound emitted by the first sound-making module 152a can be propagated outward through the first sound-making hole 151a, the first sound-making channel 121, and the gap in the connection between the display 13 and the middle frame 12. Due to a specific error in assembling the rear housing 11 and the middle frame 12, a gap extending forward exists in a bonding position between the rear housing 11 and the middle frame 12, so that a sound emitted by the second sound-making module 152b can be propagated outward through the second sound-making hole 151b, the second sound-making channel 122, and the gap in the connection between the rear housing 11 and the middle frame 12. In this embodiment, a sound is propagated outward through the gap between the display 13 and the middle frame 12 and the gap between the rear housing 11 and the middle frame 12, and an earpiece hole provided in the electronic device 1 is canceled, ensuring an exquisite appearance of the electronic device 1.

In the handset mode, the first sound-making module 152a propagates a positive phase sound wave outward through the first sound-making path, and the second sound-making module 152b propagates a negative phase sound wave outward through the second sound-making path, forming dipole effect for a person near a user during a call by using the electronic device 1. To be specific, sound waves that are out of phase with each other and that are emitted by the first sound-making module 152a and the second sound-making module 152b can cancel each other when propagated to a position of a nearby person, so as to reduce a risk of sound leakage of the electronic device 1 and implement a privacy protection function of the electronic device 1 during a call. In the speaker mode, the first sound-making module 152a propagates a positive phase sound wave outward through the first sound-making path, and the second sound-making module 152b propagates a positive phase sound wave outward through the second sound-making path, to increase volume by superimposing sound waves in a same phase.

Then, the first sound-making hole 151a and the second sound-making hole 151b are provided on a same side of the housing 151. The first sound-making channel 121 extends from the first sound-making hole 151a to a connection gap between the display 13 and the middle frame 12 to form an approximately L shape. The second sound-making channel 122 extends from the second sound-making hole 151b to a connection gap between the rear housing 11 and the middle frame 12 to also form an approximately L shape. In this way, the first sound-making path and the second sound-making path are more symmetrical, to obtain better cancellation effect.

As shown in FIG. 2, in some embodiments, to implement assembly of the speaker 152 and the housing 151, abutting parts 151g may be disposed in the housing 151, and a periphery of the speaker 152 abuts against and fits with the abutting parts 151g along a thickness direction Z and a width direction X of the electronic device 1.

In this embodiment, the housing 151 includes an upper housing 151i and a lower housing 151j, the upper housing 151i and the lower housing 151j are assembled to form an accommodation cavity, and the speaker 152 is installed in the accommodation cavity. The abutting part 151g is disposed on each of an inner periphery of the upper housing 151i and the lower housing 151j. After the speaker 152 is installed in the accommodation cavity, the periphery of the speaker 152 abuts against the abutting parts 151g. In some embodiments, the abutting part 151g includes at least double steps, that is, the abutting part 151g may be in a double-step design or a multi-step design. When no another fastening part is added to the housing 151, the speaker 152 is limited along the thickness direction Z and the width direction X of the electronic device 1, thereby improving assembly and combination strength between the housing 151 and the speaker 152, and ensuring connection reliability between the housing 151 and the speaker 152.

As shown in FIG. 2, the double steps are two stepped steps, and both the two stepped steps abut against step edge parts corresponding to the speaker 152.

As shown in FIG. 3, in some embodiments, a separation part 151h may be further disposed in the housing 151. The separation part 151h is disposed between the first sound-making hole 151a and the second sound-making hole 151b. The separation part 151h protrudes along a length direction Y of the electronic device 1, and abuts against the speaker 152, to separate the first sound-making hole 151a from the second sound-making hole 151b, so that a sound emitted by the first sound-making module 152a can enter the first sound-making hole 151a, and a sound emitted by the second sound-making module 152b can enter the second sound-making hole 151b.

In some embodiments, expansion surfaces 151k are further disposed in the first sound-making hole 151a and the second sound-making hole 151b. The expansion surfaces 151k are located at positions at which the first sound-making hole 151a and the second sound-making hole 151b are excessively close to the speaker 152. The expansion surface 151k causes an inner wall of the first sound-making hole 151a to be tilted toward the first sound-making module 152a, and an aperture of the first sound-making hole 151a gradually increases in a direction close to the first sound-making module 152a. The expansion surface 151k causes an inner wall of the second sound-making hole 151b to be tilted toward the first sound-making module 152b, and an aperture of the first sound-making hole 151a gradually increases in a direction close to the first sound-making module 152b. In this way, a sound-making area of each of the first sound-making hole 151a and the second sound-making hole 151b is expanded, to ensure sound-making effect.

As shown in FIG. 3, FIG. 6, FIG. 9, and FIG. 10, in some embodiments, the electronic device 1 further includes a first sealing element 16. The first sealing element 16 is disposed between the housing 151 and the middle frame 12. The first sealing element 16 is configured to seal a connection position between the first sound-making hole 151a and the first sound-making channel 121, and a connection position between the second sound-making hole 151b and the second sound-making channel 122.

In this embodiment, the first sealing element 16 is in a "Θ" shape. To be specific, the first sealing element 16 is provided with a first hole and a second hole, and the first hole corresponds to the first sound-making hole 151a, so that the first sound-making hole 151a communicates with the first sound-making channel 121, and the second hole corresponds to the second sound-making hole 151b, so that the second sound-making hole 151b communicates with the second sound-making channel 122. The first sealing element 16 is disposed, to prevent mutual interference between a sound emitted by the first sound-making module 152a and a sound emitted by the second sound-making module 152b, avoid cancellation of the two sounds in the electronic device 1, and ensure normal use of the user.

Because the first sound-making hole 151a and the second sound-making hole 151b are disposed on the same side of the housing 151, in this embodiment, one first sealing element 16 may be used for sealing the two sound-making holes simultaneously, thereby reducing processes of sealing the sound-making holes, simplifying an assembly process, and reducing costs.

In some embodiments, a material of the first sealing element 16 may be silica gel. The first sealing element 16 can implement sealing effect by pressing the housing 151 against the middle frame 12. Alternatively, the first sealing element 16 may be formed by adhesive or glue dispensing, and is bonded to the housing 151 and the middle frame 12.

As shown in FIG. 3, FIG. 3 is a diagram of fitting between a housing 151 and a middle frame 12 in an electronic device 1 according to a first embodiment. In this embodiment, a first sound-making hole 151a and a second sound-making hole 151b have a same shape and size. The first sound-making hole 151a and the second sound-making hole 151b are arranged along a thickness direction Z of the electronic device 1. A first sound-making channel 121 and a second sound-making channel 122 are arranged along the thickness direction Z of the electronic device 1. A first sound-making module 152a and a second sound-making module 152b are disposed along the thickness direction Z of the electronic device 1, so that positions of the first sound-making module 152a, the first sound-making hole 151a and the first sound-making channel 121 are at a same height, and positions of the second sound-making module 152b, the second sound-making hole 151b and the second sound-making channel 122 are at a same height, thereby shortening a first sound-making path and a second sound-making path as much as possible, and ensuring sound effect.

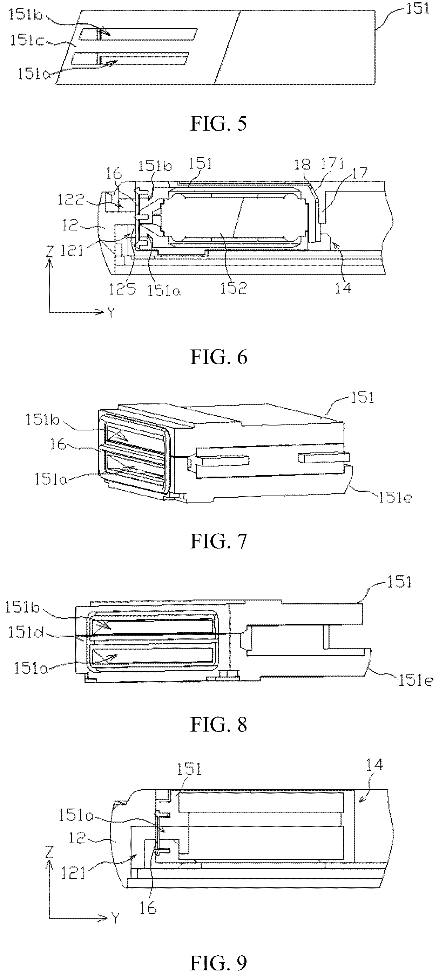

As shown in FIG. 4 and FIG. 5, a surface on which the first sound-making hole 151a and the second sound-making hole 151b are located is a first inclined surface 151c. A second inclined surface 123 corresponding to the first inclined surface 151c is disposed on the middle frame 12. The housing 151 presses against a first sealing element 16 through fitting between the first inclined surface 151c and the second inclined surface 123. In this embodiment, the first sealing element 16 is disposed between the first inclined surface 151c and the second inclined surface 123. A surface that is of the housing 151 and that fits with the middle frame 12 is arranged as an inclined surface, and the first inclined surface 151c of the housing 151 presses against the second inclined surface 123, so that the first inclined surface 151c and the second inclined surface 123 press-fit the first sealing element 16, and the first inclined surface 151c and the second inclined surface 123 are closely attached to the first sealing element 16.

As shown in FIG. 3, a limiting part 124 is further disposed on the middle frame 12, and the limiting part 124 abuts against a side that is of the housing 151 and that is away from the first inclined surface 151c, to limit a position of the housing 151. In this embodiment, along a length direction Y of the electronic device 1, the limiting part 124 and the second inclined surface 123 respectively abut against two sides of the housing 151, to prevent the housing 151 from shaking caused by external force.

As shown in FIG. 6, in some embodiments, along a thickness direction Z of an electronic device 1, a surface on which a first sound-making hole 151a and a second sound-making hole 151b are located is a first straight surface 151d, and a second straight surface 125 corresponding to the first straight surface 151d is disposed on a middle frame 12. In this embodiment, in comparison with fitting between inclined surfaces, a surface that is of a housing 151 and that fits with the middle frame 12 is arranged as a straight surface, which helps to compress space occupied by the housing 151 in a length direction Y.

As shown in FIG. 7 and FIG. 8, in some embodiments, the electronic device 1 further includes a bracket 17. The bracket 17 is disposed on a side that is of the housing 151 and that is away from the first straight surface 151d. The bracket 17 is configured to limit a position of the housing 151. In this embodiment, along the length direction Y of the electronic device 1, the bracket 17 and a second inclined surface 123 respectively abut against two sides of the housing 151, to prevent the housing 151 from shaking caused by external force.

A third inclined surface 151e is disposed on a side that is of the housing 151 and that is away from the first straight surface 151d. A fourth inclined surface 171 fitting with the third inclined surface 151e is disposed on the bracket 17. The bracket 17 presses against a first sealing element 16 through fitting between the third inclined surface 151e and the fourth inclined surface 171. In this embodiment, the first sealing element 16 is disposed between the first straight surface 151d and the second straight surface 125. The bracket 17 press-fits the housing 151 through the inclined surface, to provide pressing force in the length direction Y of the housing 151, so that the housing 151 press-fits the first sealing element 16, and the first sealing element 16 is closely attached between the first straight surface 151d and the second straight surface 125, thereby ensuring sealing effectiveness.

In some embodiments, as shown in FIG. 6, the electronic device 1 further includes a buffer element 18, and the buffer element 18 is disposed between the bracket 17 and the housing 151. The buffer element 18 may be foam, which plays a buffering role for the housing 151, and reduces a risk of damage to a speaker 152 in the housing 151 when the bracket 17, under impact from external force, transfers the force to the speaker 152.

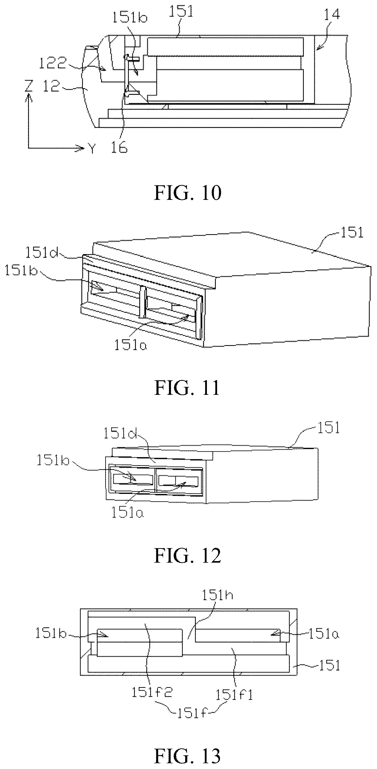

As shown in FIG. 9 and FIG. 10, in some embodiments, a first sound-making hole 151a and a second sound-making hole 151b have a same shape and size. The first sound-making hole 151a and the second sound-making hole 151b are arranged along a width direction X of an electronic device 1. A first sound-making channel 121 and a second sound-making channel 122 are arranged along the width direction X of the electronic device 1. In this embodiment, the first sound-making hole 151a and the second sound-making hole 151b are provided transversely, and the corresponding first sound-making channel 121 and the corresponding second sound-making channel 122 are also provided transversely, thereby increasing a sound-making area of a sound-making hole and a generation channel, improving airflow sound and audio effect.

As shown in FIG. 11 to FIG. 13, a first sound-making module 152a and a second sound-making module 152b are disposed along a thickness direction Z of the electronic device 1, and the first sound-making hole 151a and the second sound-making hole 151b are provided along the width direction X of the electronic device 1. Therefore, to prevent mutual interference between sounds emitted by the first sound-making module 152a and the second sound-making module 152b, a blocking part 151f is disposed on an inner wall of a housing 151. The blocking part 151f is configured to block a sound emitted by the second sound-making module 152b from being propagated to a first sound-making path, and a sound emitted by the first sound-making module 152a from being propagated to a second sound-making path.

In some embodiments, the blocking part 151f includes a first blocking part 151f1 and a second blocking part 151f2. Along a height direction of the electronic device 1, a lower edge part of the first sound-making hole 151a protrudes toward the speaker 152 to form the first blocking part 151f1, and an upper edge part of the second sound-making hole 151b protrudes toward the speaker 152 to form the second blocking part 15112. Both the first blocking part 151f1 and the second blocking part 151f2 are attached to the speaker 152.

In this embodiment, a separation part 151h is located between the first sound-making hole 151a and the second sound-making hole 151b, the first blocking part 151f1, the separation part 151h, the second blocking part 151f2 are connected in a "Z" shape, the first blocking part 151f1 is located below the first sound-making hole 151a, and the second blocking part 151f2 is located above the second sound-making hole 151b, so that the first blocking part 151f1 and the second blocking part 151f2 prevent mutual crosstalk between sounds of the first sound-making hole 151a and the second sound-making hole 151b.

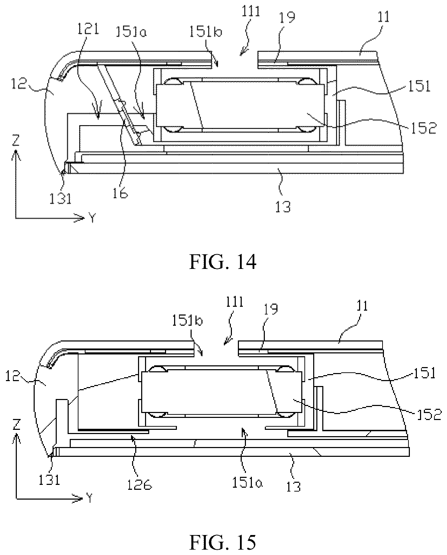

As shown in FIG. 14, in some embodiments, a second sound-making channel 122 of a middle frame 12 is canceled, and a first sound-making hole 151a is provided to penetrate through a housing 151 along a thickness direction Z of an electronic device 1.

Specifically, a gap in a connection between a display 13 and the middle frame 12 forms a first sound output portion 131, and a rear housing 11 has a second sound output portion 111. Along a length direction Y of the electronic device 1, the first sound-making hole 151a penetrates through the housing 151, and the first sound-making hole 151a is provided in the housing 151 and at a position corresponding to a first sound-making module 152a. The middle frame 12 is provided with a first sound-making channel 121, and the first sound-making channel 121 communicates the first sound-making hole 151a with the first sound output portion 131. Along the thickness direction Z of the electronic device 1, a second sound-making hole 151b penetrates through the housing 151, and the second sound-making hole 151b is provided in the housing 151 and at a position corresponding to a second sound-making module 152b. The second sound output portion 111 penetrates through the rear housing 11, and communicates with the second sound-making hole 151b.

In this embodiment, the first sound-making hole 151a and the second sound-making hole 151b are not provided on a same side of the housing 151. A hole is provided in the rear housing 11, to form the second sound output portion 111 corresponding to the second sound-making hole 151b. In other words, a sound emitted by the first sound-making module 152a can be propagated outward through a first sound-making path that is formed by the first sound-making hole 151a, the first sound-making channel 121, and the first sound output portion 131 (the gap in the connection between the display 13 and the middle frame 12). A sound emitted by the second sound-making module 152b can be propagated outward through a second sound-making path that is formed by the second sound-making hole 151b and the second sound output portion 111 (the hole in the rear housing 11). In addition, in this embodiment, it can also be implemented that sound waves that are out of phase with each other and that are emitted by the first sound-making module 152a and the second sound-making module 152b can cancel each other when propagated to a position of a nearby person.

A surface on which the first sound-making hole 151a is located is a first inclined surface 151c. A second inclined surface 123 corresponding to the first inclined surface 151c is disposed on the middle frame 12. The housing 151 presses against a first sealing element 16 through fitting between the first inclined surface 151c and the second inclined surface 123, so that the first inclined surface 151c and the second inclined surface 123 are closely attached to the first sealing element 16.

Because the first sound-making hole 151a and the second sound-making hole 151b are not provided on the same side of the housing 151, the first sound-making hole 151a and the second sound-making hole 151b need to be separately sealed. To be specific, in this embodiment, the electronic device 1 includes the first sealing element 16 and a second sealing element 19, and the first sealing element 16 is disposed between the housing 151 and the middle frame 12, to seal a connection position between the first sound-making hole 151a and the first sound-making channel 121. The second sealing element 19 is disposed between the housing 151 and the rear housing 11, to seal a connection position between the second sound-making hole 151b and the second sound output portion 111. The first sealing element 16 and the second sealing element 19 are disposed to prevent mutual interference between a sound emitted by the first sound-making module 152a and a sound emitted by the second sound-making module 152b. Both the first sound output portion 131 and the second sound output portion 111 are located on the top of the electronic device 1, and the top is an upper part of the electronic device 1 when used in a portrait mode.

As shown in FIG. 15, in some embodiments, a first sound-making channel 121 of a middle frame 12 is canceled, and a second sound-making hole 151b is provided to penetrate through a housing 151 along a thickness direction Z of an electronic device 1.

Specifically, along the thickness direction Z of the electronic device 1, a first sound-making hole 151a and the second sound-making hole 151b penetrate through the housing 151, the first sound-making hole 151a is provided in the housing 151 and at a position corresponding to a first sound-making module 152a, and the second sound-making hole 151b is provided in the housing 151 and at a position corresponding to a second sound-making module 152b. A recess portion 126 is provided on a side that is of the middle frame 12 and that is close to a display 13, a propagation cavity is formed through the recess portion 126 and the display 13, and the first sound-making hole 151a communicates with a first sound output portion 131 through the propagation cavity. A second sound output portion 111 penetrates through a rear housing 11 and communicates with the second sound-making hole 151b.

In this embodiment, two holes are provided in the rear housing 11 along the thickness direction Z of the electronic device 1, to form the first sound output portion 131 corresponding to the first sound-making hole 151a, and the second sound output portion 111 corresponding to the second sound-making hole 151b. The middle frame 12 is disposed between the housing 151 and the display 13, which affects sound propagation. Therefore, the recess portion 126 is provided in a part of an end surface that is of the middle frame 12 and that is close to the display 13, to form the propagation cavity, and a gap between the part of the middle frame 12 and the display 13 is increased. In other words, a sound emitted by the first sound-making module 152a can be propagated outward through a first sound-making path that is formed by the first sound-making hole 151a, the propagation cavity, and the first sound output portion 131. A sound emitted by the second sound-making module 152b can be propagated outward through a second sound-making path that is formed by the second sound-making hole 151b and the second sound output portion 111. In addition, in this embodiment, it can also be implemented that sound waves that are out of phase with each other and that are emitted by the first sound-making module 152a and the second sound-making module 152b can cancel each other when propagated to a position of a nearby person.

In some embodiments, the first sound-making part 131 may alternatively be formed by opening on the display 13.

Because the first sound-making hole 151a and the second sound-making hole 151b are not provided on a same side of the housing 151, the first sound-making hole 151a and the second sound-making hole 151b need to be separately sealed. To be specific, in this embodiment, the electronic device 1 includes a first sealing element 16 and a second sealing element 19, and the first sealing element 16 is disposed between the housing 151 and the middle frame 12, to seal a connection position between the first sound-making hole 151a and a bypass portion of the middle frame 12. The second sealing element 19 is disposed between the housing 151 and the rear housing 11, to seal a connection position between the second sound-making hole 151b and the second sound output portion 111. The first sealing element 16 and the second sealing element 19 are disposed to prevent mutual interference between a sound emitted by the first sound-making module 152a and a sound emitted by the second sound-making module 152b.

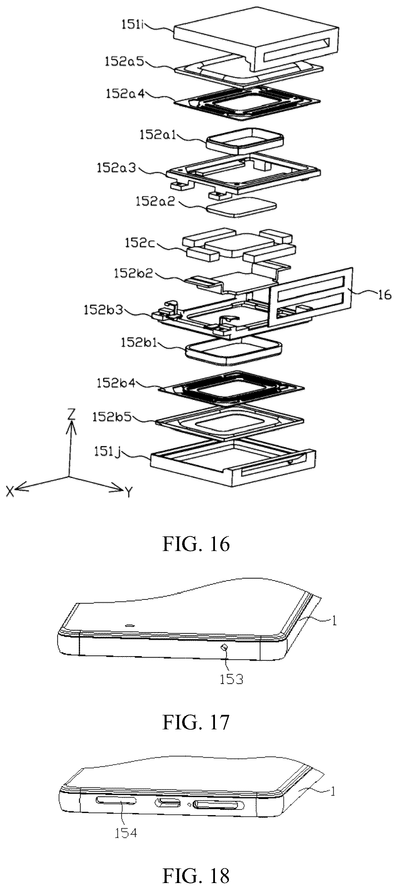

As shown in FIG. 16, in some embodiments, a speaker 152 further includes a magnetic component 152c. Along a thickness direction Z of an electronic device 1, a first sound-making module 152a and a second sound-making module 152b are respectively disposed on two opposite sides of the magnetic component 152c. The first sound-making module 152a includes a first voice coil 152a1 and a first diaphragm 152a5. A part of the first voice coil is inserted into a magnetic gap of the magnetic component, and a part of the first voice coil 152a1 is connected to the first diaphragm 152a5. The second sound-making module 152b includes a second voice coil 152b1 and a second diaphragm 152b5. Apart of the second voice coil 152b1 is inserted into the magnetic gap of the magnetic component 152c, and a part of the second voice coil 152b1 is connected to the second diaphragm 152b2.

The magnetic component 152c includes a middle part and edge parts. The edge parts are disposed around the middle part, and a gap between the edge parts and the middle part forms the magnetic gap. The magnetic gap indicates a position at which electromagnetic induction is formed, and has magnetic force. At least one of the middle part and the edge part is a magnetic element. Alternatively, the middle part is a magnetic element, and no edge part may be disposed on the magnetic component. Alternatively, the middle part is a magnetic element, and the edge part may be disposed as a magnetic conductive plate.

The first sound-making module 152a further includes a first magnetic conductive plate 152a2, a first basin frame 152a3, and a first circuit board 152a4. The first voice coil 152a1, the first magnetic conductive plate 152a2, the first basin frame 152a3, the first circuit board 152a4, and the first diaphragm 152a5 are sequentially assembled along the thickness direction Z of the electronic device 1. The second sound-making module 152b further includes a second magnetic conductive plate 152b2, a second basin frame 152b3, and a second circuit board 152b4. The second voice coil 152b1, the second magnetic conductive plate 152b2, the second basin frame 152b3, the second circuit board 152b4, and the second diaphragm 152b5 are sequentially assembled along the thickness direction Z of the electronic device 1. In this embodiment, the middle part and the edge parts are clamped between the first magnetic conductive plate 152a2 and the second magnetic conductive plate 152b2. At least the part of the first voice coil 152a1 is sleeved on a periphery of the first magnetic conductive plate 152a2, and is inserted into an upper part of the magnetic gap. At least the part of the second voice coil 152b1 is sleeved on a periphery of the second magnetic conductive plate 152b2, and is inserted into a lower part of the magnetic gap. In addition, the first voice coil 152a1 and the second voice coil 152b1 are inserted into the magnetic gap in a staggered manner. The first basin frame 152a3 is disposed on an outer ring of the first magnetic conductive plate 152a2 and is connected to the magnetic component 152c. The second basin frame 152b3 is disposed on an outer ring of the second magnetic conductive plate 152b2 and is connected to the magnetic component 152c, so as to play a supporting role. The first circuit board 152a4 is disposed above the first basin frame 152a3, so that the first circuit board 152a4 is electrically connected to the first voice coil 152a1 and an external power supply. The second circuit board 152b4 is disposed below the first basin frame 152a3, so that the second circuit board 152b4 is electrically connected to the second voice coil 152b1 and the external power supply. The first circuit board 152a4 and the second circuit board 152b4 have specific elasticity, and can play a role of supporting and braking balance. The first diaphragm 152a5 is connected to the first voice coil 152a1, and the second diaphragm 152b5 is connected to the second voice coil 152b1. The first voice coil 152a1 and the second voice coil 152b1 are powered on, to control vibration of the first diaphragm 152a5 and the second diaphragm 152b5 to propagate sounds outward.

During specific working, the two sound-making modules can work independently by adjusting control signals of the two sound-making modules. To be specific, the first diaphragm 152a5 and the second diaphragm 152b5 are controlled to vibrate in a same direction, so that the first sound-making module 152a propagates a positive/negative phase sound wave outward through a first sound-making path, and the second sound-making module 152b propagates a negative/positive phase sound wave outward through a second sound-making path, so that the two sound waves propagated outward by the two sound-making modules are at least partially out of phase with each other. The first diaphragm 152a5 and the second diaphragm 152b5 are controlled to vibrate in opposite directions, so that the first sound-making module 152a propagates a positive/negative phase sound wave outward through a first sound-making path, and the second sound-making module 152b propagates a positive/negative phase sound wave outward through a second sound-making path, so that the two sound waves propagated outward by the two sound-making modules are at least partially in phase with each other.

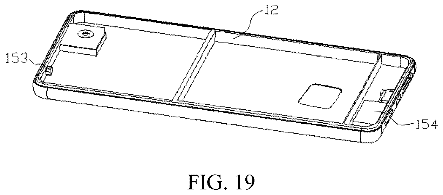

As shown in FIG. 17 and FIG. 19, in some embodiments, to improve sound cancellation effect, a sound-making system 15 further includes a microphone 153 and a filter. A first sound-making module 152a emits a first sound signal during working. The microphone 153 is capable of picking up the first sound signal, and transferring the first sound signal to the filter. The filter is capable of processing the first sound signal into a second sound signal, and transferring the second sound signal to a second sound-making module 152b. A sound wave of the first sound signal is at least partially out of phase with a sound wave of the second sound signal.

That a sound wave of the first sound signal is at least partially out of phase with a sound wave of the second sound signal means that phases of the two sound waves may be completely canceled, or phases of the two sound waves may be at least partially canceled.

During specific working, the first sound-making module 152a starts to work first by adjusting a control signal of the first sound-making module 152a. To be specific, a first diaphragm 152a5 is controlled to vibrate, so that the first sound-making module 152a propagates a first sound signal with a positive/negative phase sound wave outward through a first sound-making path, the microphone 153 obtains the first sound signal and transfers the first sound signal to the filter, and the filter processes the first sound signal to form a second sound signal that is equal in amplitude but out of phase with the first sound signal, and transfers the second sound signal to the second sound-making module 152b, so that the second sound-making module 152b propagates a negative/positive phase sound wave outward through a second sound-making path. In this way, sound waves that are out of phase with each other and that are emitted by the first sound-making module 152a and the second sound-making module 152b can cancel each other when propagated to a position of a nearby person. In this embodiment, sound cancellation effect is further improved through sound pickup by the microphone 153 and signal processing and compensation by the filter.

It should be noted that, a process of the first sound-making module 152a making a sound to the second sound-making module 152b making a sound is very short, and the sounds are made almost simultaneously in a cycle.

As shown in FIG. 18 and FIG. 19, in some embodiments, the sound-making system 15 may further include a third sound-making module 154. A sound propagated by the first sound-making module 152a to the outside and a sound propagated by the second sound-making module 152b to the outside are canceled to form a residual third sound signal. The microphone 153 is capable of picking up the third sound signal, and transferring the third sound signal to the filter. The filter is capable of processing the third sound signal into a fourth sound signal, and transferring the fourth sound signal to the third sound-making module 154. A sound wave of the third sound signal is at least partially out of phase with a sound wave of the fourth sound signal.

That a sound wave of the third sound signal is at least partially out of phase with a sound wave of the fourth sound signal means that phases of the two sound waves may be completely canceled, or phases of the two sound waves may be at least partially canceled.

During specific working, the sound of the first sound-making module 152a and the sound of the second sound-making module 152b may not be completely canceled, and there is the residual third sound signal. The microphone 153 is controlled to obtain the third sound signal and transfer the third sound signal to the filter. The filter processes the third sound signal to form the fourth sound signal that is equal in amplitude but out of phase with the third sound signal, and transfers the fourth sound signal to the third sound-making module 154, so that the third sound-making module 154 propagates outward. In this way, a sound wave that is not canceled and a sound wave that is emitted by the third sound-making module 154 cancel each other.

The third sound-making module 154 is a loudspeaker, and is disposed on an electronic device 1 relatively close to a human ear. The loudspeaker is used as a third sound source other than the first sound-making module 152a and the second sound-making module 152b, so that the loudspeaker can improve sound cancellation effect outside the electronic device 1, and further reduce impact on a user for volume in an ear.
The foregoing describes merely preferred embodiments of this application, and is not intended to limit this application. For a person skilled in the art, this application may have various modifications and variations.

## Claims

1. An electronic device (1), wherein the electronic device (1) comprises:
a rear housing (11);
a middle frame (12), wherein the middle frame (12) is connected to the rear housing (11);
a display (13), wherein the display (13) is connected to a side that is of the middle frame (12) and that is away from the rear housing (11), and the display (13) and the middle frame (12) are assembled to form an accommodation space; and
a sound-making system (15), wherein the sound-making system (15) is installed in the accommodating space (14), the sound-making system (15) comprises a housing (151) and a speaker (152), the speaker (152) is disposed in the housing (151), a first sound-making module (152a) and a second sound-making module (152b) are disposed in the speaker (152), and the housing (151) is provided with a first sound-making hole (151a) and a second sound-making hole (151b), wherein
the electronic device (1) is provided with a first sound output portion (131) and a second sound output portion (111), wherein the first sound output portion (131) is provided closer to the display (13)than the second sound output portion (111), or the first sound output portion (131) is located inside the display (13), and the second sound output portion (111) is located outside the display (13); and
the first sound-making hole (151a) communicates with the first sound output portion (131) to form a first sound-making path, a sound emitted by the first sound-making module (152a) is propagated outward through the first sound-making path, the second sound-making hole (151b) communicates with the second sound output portion (111) to form a second sound-making path, and a sound emitted by the second sound-making module (152b) is propagated outward through the second sound-making path,
wherein the sound-making system (15) further comprises a microphone (153) and a filter,
wherein the first sound-making module (152a) emits a first sound signal during working, the microphone (153) is capable of picking up the first sound signal and transferring the first sound signal to the filter, wherein the filter is capable of processing the first sound signal into a second sound signal and transferring the second sound signal to the second sound-making module (152b), and
wherein a sound wave of the first sound signal is at least partially out of phase with a sound wave of the second sound signal.

2. The electronic device (1) according to claim 1, wherein along a thickness direction (Z) of the electronic device (1), the first sound-making hole (151a) and the second sound-making hole (151b) penetrate through the housing (151), the first sound-making hole (151a) is provided in the housing (151) and at a position corresponding to the first sound-making module (152a), and the second sound-making hole (151b) is provided in the housing (151) and at a position corresponding to the second sound-making module (152b);
a gap in a connection between the display (13) and the middle frame (12) forms the first sound output portion (131), a recess portion (126) is provided on a side that is of the middle frame (12) and that is close to the display (13), a propagation cavity is formed through the recess portion (126) and the display (13), and the first sound-making hole (151a) communicates with the first sound output portion (131) through the propagation cavity; and
the second sound output portion (111) penetrates through the rear housing (11), and communicates with the second sound-making hole (151b); or
along a length direction (Y) of the electronic device (1), the first sound-making hole (151a) penetrates through the housing (151), and the first sound-making hole (151a) is provided in the housing (151) and at a position corresponding to the first sound-making module (152a);
a gap in a connection between the display (13) and the middle frame (12) forms the first sound output portion (131), the middle frame (12) is provided with a first sound-making channel (121), and the first sound-making hole (151a) communicates with the first sound output portion (131) through the first sound-making channel (121);
along a thickness direction (Z) of the electronic device (1), the second sound-making hole (151b) penetrates through the housing (151), and the second sound-making hole (151b) is provided in the housing (151) and at a position corresponding to the second sound-making module (152b); and
the second sound output portion (111) penetrates through the rear housing (11), and communicates with the second sound-making hole (151b).

3. The electronic device (1) according to claim 2, wherein the electronic device (1) further comprises a first sealing element (16) and a second sealing element (19);
the first sealing element (16) is configured to seal a connection position between the first sound-making hole (151a) and the first sound-making channel (121), and the second sealing element (19) is configured to seal a connection position between the second sound-making hole (151b) and the second sound output portion (111); and
both the first sound output portion (131) and the second sound output portion (111) are located on the top of the electronic device (1).

4. The electronic device (1) according to claim 1, wherein a gap in a connection between the display (13) and the middle frame (12) forms the first sound output portion (131), and a gap in a connection between the rear housing (11) and the middle frame (12) forms the second sound output portion (111);
along a length direction (Y) of the electronic device (1), the first sound-making hole (151a) and the second sound-making hole (151b) penetrate through the housing (151), and the first sound-making hole (151a) and the second sound-making hole (151b) are located on a same side of the housing (151);
the middle frame (12) is provided with a first sound-making channel (121) and a second sound-making channel (122); and
the first sound-making hole (151a) communicates with the first sound output portion (131) through the first sound-making channel (121), and the second sound-making hole (151b) communicates with the second sound output portion (111) through the second sound-making channel (122).

5. The electronic device (1) according to claim 4, wherein the electronic device (1) further comprises a first sealing element (16); and
the first sealing element (16) is disposed between the housing (151) and the middle frame (12), and the first sealing element (16) is configured to seal a connection position between the first sound-making hole (151a) and the first sound-making channel (121), and a connection position between the second sound-making hole (151b) and the second sound-making channel (122).

6. The electronic device (1) according to claim 5, wherein the first sound-making hole (151a) and the second sound-making hole (151b) are provided along a thickness direction (Z) of the electronic device (1); and
the first sound-making channel (121) and the second sound-making channel (122) are provided along the thickness direction (Z) of the electronic device (1).

7. The electronic device (1) according to claim 6, wherein a surface on which the first sound-making hole (151a) and the second sound-making hole (151b) are located is a first inclined surface (151c); and a second inclined surface (123) corresponding to the first inclined surface (151c) is disposed on the middle frame (12), and the housing (151) presses against the first sealing element (16) through fitting between the first inclined surface (151c) and the second inclined surface (123).

8. The electronic device (1) according to claim 7, wherein a limiting part (124) is further disposed on the middle frame (12), and the limiting part (124) abuts against a side that is of the housing (151) and that is away from the first inclined surface (151c), to limit a position of the housing (151).

9. The electronic device (1) according to claim 5, wherein along a thickness direction (Z) of the electronic device (1), a surface on which the first sound-making hole (151a) and the second sound-making hole (151b) are located is a first straight surface (151d); and
a second straight surface (125) corresponding to the first straight surface (151d) is disposed on the middle frame (12).

10. The electronic device (1) according to claim 9, wherein the electronic device (1) further comprises a bracket (17), and the bracket (17) is disposed on a side that is of the housing (151) and that is away from the first straight surface (151d); and
the bracket (17) is configured to limit a position of the housing (151).

11. The electronic device (1) according to claim 10, wherein a third inclined surface (151e) is disposed on the side that is of the housing (151) and that is away from the first straight surface (151d);
a fourth inclined surface (171) fitting with the third inclined surface (151e) is disposed on the bracket (17), and the bracket (17) presses against the first sealing element (16) through fitting between the fourth inclined surface (171) and the third inclined surface (151e);
the electronic device (1) further comprises a buffer element (18); and
the buffer element (18) is disposed between the bracket (17) and the housing (151).

12. The electronic device (1) according to claim 4, wherein the first sound-making hole (151a) and the second sound-making hole (151b) are provided along a width direction (X) of the electronic device (1); and
the first sound-making channel (121) and the second sound-making channel (122) are provided along the width direction (X) of the electronic device (1).

13. The electronic device (1) according to claim 12, wherein a blocking part (151f) is disposed on an inner wall of the housing (151), and the blocking part (151f) is configured to prevent the sound emitted by the second sound-making module (152b) from being propagated to the first sound-making path and the sound emitted by the first sound-making module (152a) from being propagated to the second sound-making path.

14. The electronic device (1) according to claim 13, wherein the blocking part (151f) comprises a first blocking part (151fl) and a second blocking part (151f2);
along a height direction of the electronic device (1), a lower edge part of the first sound-making hole (151a) protrudes toward the speaker (152) to form the first blocking part (151fl), and an upper edge part of the second sound-making hole (151b) protrudes toward the speaker (152) to form the second blocking part (151f2); and
both the first blocking part (151fl) and the second blocking part (151f2) are attached to the speaker (152).

15. The electronic device (1) according to any one of claims 1 to 14, wherein when the electronic device (1) is in a handset mode, a sound wave propagated outward by the first sound-making module (152a) through the first sound-making path is at least partially out of phase with a sound wave propagated outward by the second sound-making module (152b) through the second sound-making path.

## Patentansprüche

1. Elektronische Vorrichtung (1), wobei die elektronische Vorrichtung (1) Folgendes umfasst:
ein hinteres Gehäuse (11);
einen Mittelrahmen (12), wobei der Mittelrahmen (12) mit dem hinteren Gehäuse (11) verbunden ist;
eine Anzeige (13), wobei die Anzeige (13) mit einer Seite verbunden ist, die des Mittelrahmens (12) ist und die von dem hinteren Gehäuse (11) abgewandt ist, und die Anzeige (13) und der Mittelrahmen (12) zusammengebaut sind, um einen Aufnahmeraum zu bilden; und
ein Schallerzeugungssystem (15), wobei das Schallerzeugungssystem (15) in dem Aufnahmeraum (14) installiert ist, das Schallerzeugungssystem (15) ein Gehäuse (151) und einen Lautsprecher (152) umfasst, der Lautsprecher (152) in dem Gehäuse (151) angeordnet ist, ein erstes Schallerzeugungsmodul (152a) und ein zweites Schallerzeugungsmodul (152b) in dem Lautsprecher (152) angeordnet sind und das Gehäuse (151) mit einem ersten Schallerzeugungsloch (151a) und einem zweiten Schallerzeugungsloch (151b) versehen ist, wobei die elektronische Vorrichtung (1) mit einem ersten Schallausgabeabschnitt (131) und einem zweiten Schallausgabeabschnitt (111) versehen ist, wobei der erste Schallausgabeabschnitt (131) näher an der Anzeige (13) als der zweite Schallausgabeabschnitt (111) bereitgestellt ist, oder der erste Schallausgabeabschnitt (131) innerhalb der Anzeige (13) angeordnet ist und der zweite Schallausgabeabschnitt (111) außerhalb der Anzeige (13) angeordnet ist; und
das erste Schallerzeugungsloch (151a) mit dem ersten Schallausgabeabschnitt (131) kommuniziert, um einen ersten Schallerzeugungspfad zu bilden, ein durch das erste Schallerzeugungsmodul (152a) emittierter Schall durch den ersten Schallerzeugungspfad nach außen propagiert wird, das zweite Schallerzeugungsloch (151b) mit dem zweiten Schallausgabeabschnitt (111) kommuniziert, um einen zweiten Schallerzeugungspfad zu bilden, und ein durch das zweite Schallerzeugungsmodul (152b) emittierter Schall durch den zweiten Schallerzeugungspfad nach außen propagiert wird,
wobei das Schallerzeugungssystem (15) ferner ein Mikrofon (153) und einen Filter umfasst,
wobei das erste Schallerzeugungsmodul (152a) während des Arbeitens ein erstes Schallsignal emittiert, das Mikrofon (153) in der Lage ist, das erste Schallsignal aufzunehmen und das erste Schallsignal an den Filter zu übertragen,
wobei der Filter in der Lage ist, das erste Schallsignal in ein zweites Schallsignal zu verarbeiten und das zweite Schallsignal an das zweite Schallerzeugungsmodul (152b) zu übertragen, und
wobei eine Schallwelle des ersten Schallsignals zu einer Schallwelle des zweiten Schallsignals wenigstens teilweise phasenverschoben ist.

2. Elektronische Vorrichtung (1) nach Anspruch 1, wobei entlang einer Dickenrichtung (Z) der elektronischen Vorrichtung (1) das erste Schallerzeugungsloch (151a) und das zweite Schallerzeugungsloch (151b) das Gehäuse (151) durchdringen, das erste Schallerzeugungsloch (151a) in dem Gehäuse (151) und an einer Position bereitgestellt ist, die dem ersten Schallerzeugungsmodul (152a) entspricht, und das zweite Schallerzeugungsloch (151b) in dem Gehäuse (151) und an einer Position bereitgestellt ist, die dem zweiten Schallerzeugungsmodul (152b) entspricht;
ein Spalt in einer Verbindung zwischen der Anzeige (13) und dem Mittelrahmen (12) den ersten Schallausgabeabschnitt (131) bildet, ein Aussparungsabschnitt (126) auf einer Seite bereitgestellt ist, die des Mittelrahmens (12) ist und die nahe der Anzeige (13) ist, ein Propagationshohlraum durch den Aussparungsabschnitt (126) und die Anzeige (13) gebildet ist und das erste Schallerzeugungsloch (151a) mit dem ersten Schallausgabeabschnitt (131) durch den Propagationshohlraum kommuniziert; und
der zweite Schallausgabeabschnitt (111) das hintere Gehäuse (11) durchdringt und mit dem zweiten Schallerzeugungsloch (151b) kommuniziert; oder
entlang einer Längsrichtung (Y) der elektronischen Vorrichtung (1) das erste Schallerzeugungsloch (151a) das Gehäuse (151) durchdringt und das erste Schallerzeugungsloch (151a) in dem Gehäuse (151) und an einer Position bereitgestellt ist, die dem ersten Schallerzeugungsmodul (152a) entspricht;
ein Spalt in einer Verbindung zwischen der Anzeige (13) und dem Mittelrahmen (12) den ersten Schallausgabeabschnitt (131) bildet, der Mittelrahmen (12) mit einem ersten Schallerzeugungskanal (121) versehen ist und das erste Schallerzeugungsloch (151a) mit dem ersten Schallausgabeabschnitt (131) durch den ersten Schallerzeugungskanal (121) kommuniziert;
entlang einer Dickenrichtung (Z) der elektronischen Vorrichtung (1) das zweite Schallerzeugungsloch (151b) das Gehäuse (151) durchdringt und das zweite Schallerzeugungsloch (151b) in dem Gehäuse (151) und an einer Position bereitgestellt ist, die dem zweiten Schallerzeugungsmodul (152b) entspricht; und
der zweite Schallausgabeabschnitt (111) das hintere Gehäuse (11) durchdringt und mit dem zweiten Schallerzeugungsloch (151b) kommuniziert.

3. Elektronische Vorrichtung (1) nach Anspruch 2, wobei die elektronische Vorrichtung (1) ferner ein erstes Dichtungselement (16) und ein zweites Dichtungselement (19) umfasst;
das erste Dichtungselement (16) konfiguriert ist, um eine Verbindungsposition zwischen dem ersten Schallerzeugungsloch (151a) und dem ersten Schallerzeugungskanal (121) abzudichten, und das zweite Dichtungselement (19) konfiguriert ist, um eine Verbindungsposition zwischen dem zweiten Schallerzeugungsloch (151b) und dem zweiten Schallausgabeabschnitt (111) abzudichten; und
sowohl der erste Schallausgabeabschnitt (131) als auch der zweite Schallausgabeabschnitt (111) auf der Oberseite der elektronischen Vorrichtung (1) angeordnet sind.

4. Elektronische Vorrichtung (1) nach Anspruch 1, wobei ein Spalt in einer Verbindung zwischen der Anzeige (13) und dem Mittelrahmen (12) den ersten Schallausgabeabschnitt (131) bildet und ein Spalt in einer Verbindung zwischen dem hinteren Gehäuse (11) und dem Mittelrahmen (12) den zweiten Schallausgabeabschnitt (111) bildet;
entlang einer Längsrichtung (Y) der elektronischen Vorrichtung (1) das erste Schallerzeugungsloch (151a) und das zweite Schallerzeugungsloch (151b) das Gehäuse (151) durchdringen und das erste Schallerzeugungsloch (151a) und das zweite Schallerzeugungsloch (151b) auf einer selben Seite des Gehäuses (151) angeordnet sind;
der Mittelrahmen (12) mit einem ersten Schallerzeugungskanal (121) und einem zweiten Schallerzeugungskanal (122) versehen ist; und
das erste Schallerzeugungsloch (151a) mit dem ersten Schallausgabeabschnitt (131) durch den ersten Schallerzeugungskanal (121) kommuniziert und das zweite Schallerzeugungsloch (151b) mit dem zweiten Schallausgabeabschnitt (111) durch den zweiten Schallerzeugungskanal (122) kommuniziert.

5. Elektronische Vorrichtung (1) nach Anspruch 4, wobei die elektronische Vorrichtung (1) ferner ein erstes Dichtungselement (16) umfasst; und
das erste Dichtungselement (16) zwischen dem Gehäuse (151) und dem Mittelrahmen (12) angeordnet ist und das erste Dichtungselement (16) konfiguriert ist, um eine Verbindungsposition zwischen dem ersten Schallerzeugungsloch (151a) und dem ersten Schallerzeugungskanal (121) und eine Verbindungsposition zwischen dem zweiten Schallerzeugungsloch (151b) und dem zweiten Schallerzeugungskanal (122) abzudichten.

6. Elektronische Vorrichtung (1) nach Anspruch 5, wobei das erste Schallerzeugungsloch (151a) und das zweite Schallerzeugungsloch (151b) entlang einer Dickenrichtung (Z) der elektronischen Vorrichtung (1) bereitgestellt sind; und
der erste Schallerzeugungskanal (121) und der zweite Schallerzeugungskanal (122) entlang der Dickenrichtung (Z) der elektronischen Vorrichtung (1) bereitgestellt sind.

7. Elektronische Vorrichtung (1) nach Anspruch 6, wobei eine Oberfläche, auf der das erste Schallerzeugungsloch (151a) und das zweite Schallerzeugungsloch (151b) angeordnet sind, eine erste geneigte Oberfläche (151c) ist; und
eine zweite geneigte Oberfläche (123), die der ersten geneigten Oberfläche (151c) entspricht, an dem Mittelrahmen (12) angeordnet ist und das Gehäuse (151) durch Passung zwischen der ersten geneigten Oberfläche (151c) und der zweiten geneigten Oberfläche (123) gegen das erste Dichtungselement (16) drückt.

8. Elektronische Vorrichtung (1) nach Anspruch 7, wobei ferner ein Begrenzungsteil (124) auf dem Mittelrahmen (12) angeordnet ist und das Begrenzungsteil (124) an einer Seite anliegt, die des Gehäuses (151) ist und die von der ersten geneigten Oberfläche (151c) abgewandt ist, um eine Position des Gehäuses (151) zu begrenzen.

9. Elektronische Vorrichtung (1) nach Anspruch 5, wobei entlang einer Dickenrichtung (Z) der elektronischen Vorrichtung (1) eine Oberfläche, auf der das erste Schallerzeugungsloch (151a) und das zweite Schallerzeugungsloch (151b) angeordnet sind, eine erste gerade Oberfläche (151d) ist; und
eine zweite gerade Oberfläche (125), die der ersten geraden Oberfläche (151d) entspricht, auf dem Mittelrahmen (12) angeordnet ist.

10. Elektronische Vorrichtung (1) nach Anspruch 9, wobei die elektronische Vorrichtung (1) ferner eine Halterung (17) umfasst und die Halterung (17) auf einer Seite angeordnet ist, die des Gehäuses (151) ist und die von der ersten geraden Oberfläche (151d) abgewandt ist; und
die Halterung (17) konfiguriert ist, um eine Position des Gehäuses (151) zu begrenzen.

11. Elektronische Vorrichtung (1) nach Anspruch 10, wobei eine dritte geneigte Oberfläche (151e) auf der Seite angeordnet ist, die des Gehäuses (151) ist und die von der ersten geraden Oberfläche (151d) abgewandt ist;
eine vierte geneigte Oberfläche (171), die mit der dritten geneigten Oberfläche (151e) zusammenpasst, auf der Halterung (17) angeordnet ist und die Halterung (17) durch Passung zwischen der vierten geneigten Oberfläche (171) und der dritten geneigten Oberfläche (151e) gegen das erste Dichtungselement (16) drückt;
die elektronische Vorrichtung (1) ferner ein Pufferelement (18) umfasst; und
das Pufferelement (18) zwischen der Halterung (17) und dem Gehäuse (151) angeordnet ist.

12. Elektronische Vorrichtung (1) nach Anspruch 4, wobei das erste Schallerzeugungsloch (151a) und das zweite Schallerzeugungsloch (151b) entlang einer Breitenrichtung (X) der elektronischen Vorrichtung (1) bereitgestellt sind; und der erste Schallerzeugungskanal (121) und der zweite Schallerzeugungskanal (122) entlang der Breitenrichtung (X) der elektronischen Vorrichtung (1) bereitgestellt sind.

13. Elektronische Vorrichtung (1) nach Anspruch 12, wobei ein Blockierteil (151f) an einer Innenwand des Gehäuses (151) angeordnet ist und das Blockierteil (151f) konfiguriert ist, um zu verhindern, dass der durch das zweite Schallerzeugungsmodul (152b) emittierte Schall zu dem ersten Schallerzeugungspfad propagiert wird und der durch das erste Schallerzeugungsmodul (152a) emittierte Schall zu dem zweiten Schallerzeugungspfad propagiert wird.

14. Elektronische Vorrichtung (1) nach Anspruch 13, wobei das Blockierteil (151f) ein erstes Blockierteil (151f1) und ein zweites Blockierteil (151f2) umfasst:
entlang einer Höhenrichtung der elektronischen Vorrichtung (1) ein unterer Kantenteil des ersten Schallerzeugungslochs (151a) in Richtung des Lautsprechers (152) vorsteht, um das erste Blockierteil (151f1) zu bilden, und ein oberer Kantenteil des zweiten Schallerzeugungslochs (151b) in Richtung des Lautsprechers (152) vorsteht, um das zweite Blockierteil (151f2) zu bilden; und
sowohl das erste Blockierteil (151f1) als auch das zweite Blockierteil (151f2) an dem Lautsprecher (152) angebracht sind.

15. Elektronische Vorrichtung (1) nach einem der Ansprüche 1 bis 14, wobei, wenn sich die elektronische Vorrichtung (1) in einem Handapparat-Modus befindet, eine durch das erste Schallerzeugungsmodul (152a) durch den ersten Schallerzeugungspfad nach außen propagierte Schallwelle wenigstens teilweise phasenverschoben zu einer durch das zweite Schallerzeugungsmodul (152b) durch den zweiten Schallerzeugungspfad nach außen propagierten Schallwelle ist.

## Revendications

1. Dispositif électronique (1), dans lequel le dispositif électronique (1) comprend :
un boîtier arrière (11) ;
un cadre central (12), dans lequel le cadre central (12) est relié au boîtier arrière (11) ;
un écran (13), dans lequel l'écran (13) est relié à un côté qui appartient au cadre central (12) et qui est opposé au boîtier arrière (11), et l'écran (13) et le cadre central (12) sont assemblés pour former un espace de rangement ; et
un système de production sonore (15), dans lequel le système de production sonore (15) est installé dans l'espace prévu à cet effet (14), le système de production sonore (15) comprend un boîtier (151) et un haut-parleur (152), le haut-parleur (152) est disposé dans le boîtier (151), un premier module de production sonore (152a) et un second module de production sonore (152b) sont disposés dans le haut-parleur (152), et le boîtier (151) est pourvu d'un premier orifice de production sonore (151a) et d'un second orifice de production sonore (151b), dans lequel
le dispositif électronique (1) est pourvu d'une première partie de sortie sonore (131) et d'une seconde partie de sortie sonore (111), dans lequel la première partie de sortie sonore (131) est plus proche de l'écran (13) que la seconde partie de sortie sonore (111), ou la première partie de sortie sonore (131) est située à l'intérieur de l'écran (13) et la seconde partie de sortie sonore (111) est située à l'extérieur de l'écran (13) ; et
le premier orifice de production sonore (151a) communique avec la première partie de sortie sonore (131) pour former un premier chemin de production sonore, un son émis par le premier module de production sonore (152a) est propagé vers l'extérieur à travers le premier chemin de production sonore, le second orifice de production sonore (151b) communique avec la seconde partie de sortie sonore (111) pour former un second chemin de production sonore, et un son émis par le second module de production sonore (152b) est propagé vers l'extérieur à travers le second chemin de production sonore,
dans lequel le système de production sonore (15) comprend en outre un microphone (153) et un filtre,
dans lequel le premier module de production sonore (152a) émet un premier signal sonore pendant son fonctionnement, le microphone (153) est capable de capter le premier signal sonore et de transférer le premier signal sonore au filtre,
dans lequel le filtre est capable de traiter le premier signal sonore en un second signal sonore et de transférer le second signal sonore au second module de production sonore (152b), et
dans lequel une onde sonore du premier signal sonore est au moins partiellement déphasée par rapport à une onde sonore du second signal sonore.

2. Dispositif électronique (1) selon la revendication 1, dans lequel, le long d'une direction d'épaisseur (Z) du dispositif électronique (1), le premier orifice de production sonore (151a) et le second orifice de production sonore (151b) traversent le boîtier (151), le premier orifice de production sonore (151a) est pourvu dans le boîtier (151) et à une position correspondant au premier module de production sonore (152a), et le second orifice de production sonore (151b) est prévu dans le boîtier (151) et à une position correspondant au second module de production sonore (152b) ;
un espace dans une connexion entre l'écran (13) et le cadre central (12) forme la première partie de sortie sonore (131), une partie en retrait (126) est pourvue sur un côté du cadre central (12) et qui est proche de l'écran (13), une cavité de propagation est formée à travers la partie en retrait (126) et l'écran (13), et le premier orifice de production sonore (151a) communique avec la première partie de sortie sonore (131) à travers la cavité de propagation ; et
la seconde partie de sortie sonore (111) traverse le boîtier arrière (11) et communique avec le second orifice de production sonore (151b) ; ou
le long d'une direction de longueur (Y) du dispositif électronique (1), le premier orifice de production sonore (151a) traverse le boîtier (151), et le premier orifice de production sonore (151a) est pourvu dans le boîtier (151) et à une position correspondant au premier module de production sonore (152a) ; un espace dans une connexion entre l'écran (13) et le cadre central (12) forme la première partie de sortie sonore (131), le cadre central (12) est pourvu d'un premier canal de production sonore (121), et le premier orifice de production sonore (151a) communique avec la première partie de sortie sonore (131) à travers le premier canal de production sonore (121) ;
le long d'une direction d'épaisseur (Z) du dispositif électronique (1), le second orifice de production sonore (151b) traverse le boîtier (151), et le second orifice de production sonore (151b) est pourvu dans le boîtier (151) et à une position correspondant au second module de production sonore (152b) ; et la seconde partie de sortie sonore (111) traverse le boîtier arrière (11) et communique avec le second orifice de production sonore (151b).

3. Dispositif électronique (1) selon la revendication 2, dans lequel le dispositif électronique (1) comprend en outre un premier élément d'étanchéité (16) et un second élément d'étanchéité (19) ;
le premier élément d'étanchéité (16) est configuré pour sceller une position de connexion entre le premier orifice de production sonore (151a) et le premier canal de production sonore (121), et le second élément d'étanchéité (19) est configuré pour sceller une position de connexion entre le second orifice de production sonore (151b) et la seconde partie de sortie sonore (111) ; et
la première partie de sortie sonore (131) et la seconde partie de sortie sonore (111) sont toutes deux situées sur le dessus du dispositif électronique (1).

4. Dispositif électronique (1) selon la revendication 1, dans lequel un espace dans une connexion entre l'écran (13) et le cadre central (12) forme la première partie de sortie sonore (131), et un espace dans une connexion entre le boîtier arrière (11) et le cadre central (12) forme la seconde partie de sortie sonore (111) ;
le long d'une direction de longueur (Y) du dispositif électronique (1), le premier orifice de production sonore (151a) et le second orifice de production sonore (151b) traversent le boîtier (151), et le premier orifice de production sonore (151a) et le second orifice de production sonore (151b) sont situés sur un même côté du boîtier (151) ;
le cadre central (12) est pourvu d'un premier canal de production sonore (121) et d'un second canal de production sonore (122) ; et
le premier orifice de production sonore (151a) communique avec la première partie de sortie sonore (131) à travers le premier canal de production sonore (121), et le second orifice de production sonore (151b) communique avec la seconde partie de sortie sonore (111) à travers le second canal de production sonore (122).

5. Dispositif électronique (1) selon la revendication 4, dans lequel le dispositif électronique (1) comprend en outre un premier élément d'étanchéité (16) ; et
le premier élément d'étanchéité (16) est disposé entre le boîtier (151) et le cadre central (12), et le premier élément d'étanchéité (16) est configuré pour sceller une position de connexion entre le premier orifice de production sonore (151a) et le premier canal de production sonore (121), et une position de connexion entre le second orifice de production sonore (151b) et le second canal de production sonore (122).

6. Dispositif électronique (1) selon la revendication 5, dans lequel le premier orifice de production sonore (151a) et le second orifice de production sonore (151b) sont pourvus le long d'une direction d'épaisseur (Z) du dispositif électronique (1) ; et
le premier canal de production sonore (121) et le second canal de production sonore (122) sont pourvus le long de la direction d'épaisseur (Z) du dispositif électronique (1).

7. Dispositif électronique (1) selon la revendication 6, dans lequel une surface sur laquelle sont situés le premier orifice de production sonore (151a) et le second orifice de production sonore (151b) est une première surface inclinée (151c) ; et une deuxième surface inclinée (123) correspondant à la première surface inclinée (151c) est disposée sur le cadre central (12), et le boîtier (151) appuie contre le premier élément d'étanchéité (16) en s'ajustant entre la première surface inclinée (151c) et la deuxième surface inclinée (123).

8. Dispositif électronique (1) selon la revendication 7, dans lequel une partie de limitation (124) est en outre disposée sur le cadre central (12), et la partie de limitation (124) bute contre un côté qui appartient au boîtier (151) et qui est éloigné de la première surface inclinée (151c), pour limiter une position du boîtier (151).

9. Dispositif électronique (1) selon la revendication 5, dans lequel, le long d'une direction d'épaisseur (Z) du dispositif électronique (1), une surface sur laquelle sont situés le premier orifice de production sonore (151a) et le second orifice de production sonore (151b) est une première surface droite (151d) ; et
une seconde surface droite (125) correspondant à la première surface droite (151d) est disposée sur le cadre médian (12).

10. Dispositif électronique (1) selon la revendication 9, dans lequel le dispositif électronique (1) comprend en outre un support (17), et le support (17) est disposé sur un côté qui appartient au boîtier (151) et qui est éloigné de la première surface droite (151d) ; et
le support (17) est configuré pour limiter une position du boîtier (151).

11. Dispositif électronique (1) selon la revendication 10, dans lequel une troisième surface inclinée (151e) est disposée sur le côté qui appartient au boîtier (151) et qui est éloigné de la première surface droite (151d) ;
une quatrième surface inclinée (171) s'ajustant à la troisième surface inclinée (151e) est disposée sur le support (17), et le support (17) appuie contre le premier élément d'étanchéité (16) en s'ajustant entre la quatrième surface inclinée (171) et la troisième surface inclinée (151e) ;
le dispositif électronique (1) comprend en outre un élément tampon (18) ; et
l'élément tampon (18) est disposé entre le support (17) et le boîtier (151).

12. Dispositif électronique (1) selon la revendication 4, dans lequel le premier orifice de production sonore (151a) et le second orifice de production sonore (151b) sont pourvus le long d'une direction de largeur (X) du dispositif électronique (1) ; et
le premier canal de production sonore (121) et le second canal de production sonore (122) sont pourvus le long de la direction de largeur (X) du dispositif électronique (1).

13. Dispositif électronique (1) selon la revendication 12, dans lequel une partie de blocage (151f) est disposée sur une paroi intérieure du boîtier (151), et la partie de blocage (151f) est configurée pour empêcher le son émis par le second module de production sonore (152b) d'être propagé vers le premier chemin de production sonore et le son émis par le premier module de production sonore (152a) d'être propagé vers le second chemin de production sonore.

14. Dispositif électronique (1) selon la revendication 13, dans lequel la partie de blocage (151f) comprend une première partie de blocage (151f1) et une seconde partie de blocage (151f2) :
le long d'une direction de hauteur du dispositif électronique (1), une partie inférieure du bord du premier orifice de production sonore (151a) fait saillie vers le haut-parleur (152) pour former la première partie de blocage (151f1), et une partie supérieure de bord du second orifice de production sonore (151b) fait saillie vers le haut-parleur (152) pour former la seconde partie de blocage (151f2) ; et
la première partie de blocage (151f1) et la seconde partie de blocage (151f2) sont toutes deux fixées au haut-parleur (152).

15. Dispositif électronique (1) selon l'une quelconque des revendications 1 à 14, dans lequel, lorsque le dispositif électronique (1) est en mode combiné, une onde sonore propagée vers l'extérieur par le premier module de production sonore (152a) à travers le premier chemin de production sonore est au moins partiellement déphasée par rapport à une onde sonore propagée vers l'extérieur par le second module de production sonore (152b) à travers le second chemin de production sonore.
